# EUROPEAN PATENT SPECIFICATION

(11) **EP 0 907 046 B1**
(45) Date of publication and mention of the grant of the patent: **08.01.2003**
(21) Application number: 97830488.9
(22) Date of filing: 02.10.1997
(51) Int. Cl.: F16K 1/00, F16K 3/24, F16K 11/044, F16K 11/056

(54) **Improved valve assembly for heating systems and water-heating apparatuses**
Verbesserte Ventilanordnung für Heizsysteme und Wasserheizgeräte
Ensemble amélioré de soupape pour des systèmes de chauffage et des appareils de chauffage d'eau.

(43) Date of publication of application: 07.04.1999
(73) Proprietor: Scanferla, Giorgio, 36061 Bassano del Grappa (VI) (IT)
(72) Inventor: Scanferla, Giorgio, 36061 Bassano del Grappa (VI) (IT)
(74) Representative: Bottero, Claudio

(56) References cited:
- EP-A- 0 058 559
- EP-A- 0 679 821
- CH-A- 313 441
- CH-A- 448 658
- DE-C- 486 318
- FR-A- 1 420 815
- FR-A- 1 454 016
- FR-A- 2 180 789
- FR-A- 2 613 806
- GB-A- 624 719
- GB-A- 669 135
- US-A- 4 134 420
- US-A- 4 316 481

## Description

### Field of the Invention

The present invention relates to a valve assembly of the type comprising the features of the preamble of claim 1.

Such a valve assembly is known from EP-A-0 058 559.

More particularly, the valve assembly of the invention is preferably, though not exclusively, intended for use in domestic heating systems and water-heating apparatuses, such as for example boilers of the so-called combined type.

Throughout this description and the appended claims, the expression 'boiler of the combined type' is used to indicate a boiler adapted to generate hot water for both space heating, or primary water, as well as hot water for sanitary use.

### Background Art

In the field of domestic heating systems and appliances, and specifically in the field of gas-fired boilers, it is well known to use valve assemblies capable of cutting off (two-way valves) or diverting (three-way valves) the fluid flowing through the circuits provided therein.

It is also known that, regardless of their specific use, such valve assemblies should provide, on one side, the lowest pressure drop, and on the other side, the absence of leakouts from the circuit which is isolated independently of the differential pressure existing upstream and downstream the valve assembly and independently of the fluid used.

This in order to reduce the power required for the circulation pumps, as well as to ensure a proper distribution of the fluids in the circuit.

While several types of valve assemblies have long been available on the market, to date none is capable of fully meeting the dual requirements mentioned hereinabove.

A first known group of valve assemblies comprises a spherical or cylindrical shutter which is driven between opposite positions to respectively open and close one or two valve seats.

Although these valve assemblies allow, on one side, to achieve a relatively low pressure drop, on the other side they have no self-cleaning capability, that is, they are unable to dislodge the solid residues that frequently remains trapped between the shutter and its valve seat.

Then, these valve assemblies try to ensure the required absence of leakouts by adopting a shutter made of an elastically deformable material and applying thereon a compressive force capable to deform the material within predetermined limits so as to ensure the required fluid-tight seal.

In order to prevent plastic deformations of the shutter, however, the differential pressure existing between upstream and downstream of these valve assemblies cannot generally exceed 0.5 bar.

This value can only be exceeded by using metal shutters, which however are particularly subjected to develop fluid leaks caused by the aforesaid solid residues trapped between the shutter and its valve seat.

Another drawback of the aforesaid valves of known type is related to the high energy consumption due to the fact that, in order to provide a tight closure during the valve operation, the shutter must be held against the respective seat by a compressive force continuously applied by an electric motor included in the shutter driving means. This motor is particularly expensive, since it should be kept in an excited state while the shutter is held against its seat, in order to ensure that the desired compressive force is exerted so as to ensure the desired service.

A second group of valves of known type comprises a hollow cylindrical shutter, wherethrough the fluid can axially flow, which is drivingly displaceable between opposite positions to open and close, respectively, one or more fluid outlet conduits by means of its lateral side walls.

These valve assemblies, while enabling on the one hand to remove any solid residue from the free end of the fluid outlet conduit and to have a relatively high (generally up to about 4 bar) differential pressure upstream and downstream of the valve, they involve on the other hand a relatively high pressure drop thus requiring the installation of expensive circulation pumps of adequate power in the circuit.

The high accuracy involved in machining the shutter and its sliding seat to achieve an exact mating engagement and ensure the desired fluid-tight seal, furthermore, contributes to increase the cost of these valve assemblies, so that their use is limited only to certain special applications.

### Summary of the Invention

Accordingly, the technical problem underlying the present invention is that of providing a valve assembly which allows to ensure, on the one side, the lowest possible pressure drop and, on the other side, the absence of leakouts from the isolated circuit, while overcoming at the same time the drawbacks indicated with regard to the aforementioned prior art.

According to the invention, this problem is solved by a valve assembly as defined in claim 1.

According to the invention, it is advantageously possible to achieve both the desired low pressure drop and a fluid-tight seal by positioning the shutter inside respective valve seats wherein the same is received so as to be positioned substantially outside of the flowpath defined in the valve assembly and which is not cut off.

Throughout this description and the appended claims, the term 'fluid' will be used to indicate any substance in liquid or gaseous form flowing through the valve assembly. Preferably, but not exclusively, the fluid referred to hereinafter is water.

Preferably, the shutter comprises an essentially cylindrical metal body laterally provided with an annular gasket, essentially made of an elastically deformable material, which is removably mounted in a respective receiving seat radially formed in the side wall of said body.

Advantageously, by a proper dimensioning of the valve seats, the shutter can be received with the required interference to ensure the required fluid-tight seal which takes place between the side walls of the shutter and the corresponding valve seat in a substantially radial direction, that is, along a direction perpendicular to the travel direction of the shutter.

In this way, it is advantageously possible to structurally separate the shutter sealing region from the region designed to progressively close the fluid outlet conduit.

In other words, the valve assembly of the invention allows to use a shutter which is shaped not only for allowing an on/off type of operation, but also for a modulating operation, that is the valve is capable of regulating the flow rate of the fluid leaving the valve assembly.

In this latter instance, the shape of the shutter may be freely selected, if desired, so as to have the most suitable profile for providing an optimum regulation of the flow rate according to the shutter position with respect to the free end(s) of the fluid outlet conduit(s).

Thus, for example, at least a portion of the side wall of the shutter body may be substantially frusto-conical or curvilinear (parabolic or spherical), according to the kind of regulation sought.

Preferably, the shutter further includes an additional annular gasket, essentially made of an elastically deformable material, removably mounted in a respective receiving seat axially formed on the top face of its body.

Advantageously, this second gasket constitutes appropriate shock-absorber means for dampening possible travel end shocks of the shutter.

In an alternative embodiment, the shutter may be substantially spherical in shape, the term 'spherical' being used here to define both a fully spherical shutter body and a shutter having one or more faces which are at least partially rectilinear, provided that it also has at least one frusto-conical or curvilinear sealing surface.

Preferably, the shutter is in this case made of an elastically deformable material suitably obtainable at low cost in large-scale production by conventional moulding processes.

In this way, the aforementioned advantageous features (radial sealing, flow rate regulating capability, and shock-absorbing effect) can be achieved, by preferably shaping and designing the shutter body, even without the aforesaid gaskets.

In addition, an inexpensive modulating valve assembly of simple construction which can provide both the desired low pressure drop and an adequate tight fit under the selected working pressure, is advantageously obtained in this way.

Besides, by positioning the shutter substantially outside of the flowpath(s) defined through the valve assembly, it becomes possible not only to keep pressure drops as lower as possible, but also to use high differential pressures between upstream and downstream of the valve assembly, without any risk of undesirably deforming the shutter.

Thus, for example, differential pressures between upstream and downstream of the valve assembly up to about 4-5 bar can be provided, even with a shutter made entirely of an elastomeric material.

Preferably, the elastically deformable material used for making the aforementioned gaskets, or alternatively the shutter body, is selected from the group comprising: acrylonitrile rubber (NBR), polychloroprene rubber (CR), fluorinated rubber (FP), and ethylene-propylene-diene terpolymers (EPDM).

Preferably, the sliding seat of the shutter is substantially cylindrical and includes at least a portion having substantially the same diameter as the largest diameter of the shutter as measured at the annular lateral gaskets, when the same are provided.

In this way, the sliding seat is effective to guide the shutter translation movements along the required rectilinear travel path, without involving any costly precision machining.

Preferably, the first valve seat of the shutter formed upstream of the fluid outlet conduit is provided with a opening having at least one flaring bottom edge.

In this way, it is advantageously possible to facilitate the insertion with interference of the shutter within its sliding seat, while minimising the risk of irregular wear or, worse still, of damaging the radial-tight annular gaskets or the body of the shutter itself.

Even more preferably, the top edge of the opening of the first valve seat is also suitably flared.

In this way, the insertion of the shutter into its sliding seat is further facilitated during the assembling operations.

Preferably, in both cases the flaring angle (meaning with this term the angle formed by the edge with a vertical line passing therethrough) is of 15° to 40° and, even more preferably, equal to about 30°.

The valve assembly of this invention may be a two-way or a three-way valve. In the former case, the shutter is driven by its actuator means toward and away from a single fluid outlet conduit, which is opened and closed thereby to cut off the single flowpath defined within the valve body.

In the latter case, the shutter opens and, respectively, closes a pair of fluid outlet conduits alternately directing the fluid to one or the other of two flowpaths defined within the valve body.

Where a three-way valve assembly is provided, the end portion of the shutter sliding seat defining said second valve seat is preferably formed upstream of a second fluid outlet conduit.

Preferably, the shutter driving means comprises a linear actuator means arranged to act on a stem attached to the shutter and operated by an electric motor.

Advantageously, such means is mechanically simpler and less expensive than the actuator means employed in the valves of the prior art. Simpler engineering (less component parts) also advantageously involves reduced risks of failures.

Preferably, the linear actuator means comprises a shaft having at least one threaded portion the thread pitch of which is irreversible. In this way, the shutter can advantageously be kept in the respective valve seat without having to keep the motor in an excited state. This allows to use a simpler and less expensive motor and to reduce the energy consumption.

Furthermore, by using a linear actuator means equipped with an electric step-by-step motor, a modulating valve, that is a valve capable of regulating the flow rate of the fluid leaving the valve assembly, can be produced at a very low cost.

In a preferred embodiment, the valve assembly of this invention further includes a plug mounted on the valve body in a fluid-tight manner and guiding the sliding movement of the shutter stem therethrough.

Advantageously, the plug is adapted to seal off the shutter driving means, which is therefore structurally separated from the water circuit. In this way, the electrical or mechanical portions of such means can be serviced without opening the valve, that is without the system having to be drained empty.

### Brief Description of the Drawings

Additional features and advantages of the invention will be more clearly apparent from the following description of a preferred embodiment of a valve assembly according to the invention, given by way of non-limitative example with reference to the accompanying drawings. In the drawings:
Figure 1 is a longitudinal cross section of a three-way valve assembly according to the present invention, shown in a first operating position;
Figure 2 is a longitudinal cross section schematically showing a detail of the valve assembly shown in Figure 1, in a second operating position;
Figure 3 is a longitudinal cross section of a two-way valve assembly according to the present invention, shown in a first operating position;
Figure 4 is a longitudinal cross section schematically showing a detail of the valve assembly shown in Figure 3, in a second operating position.

### Detailed Description of Preferred Embodiments

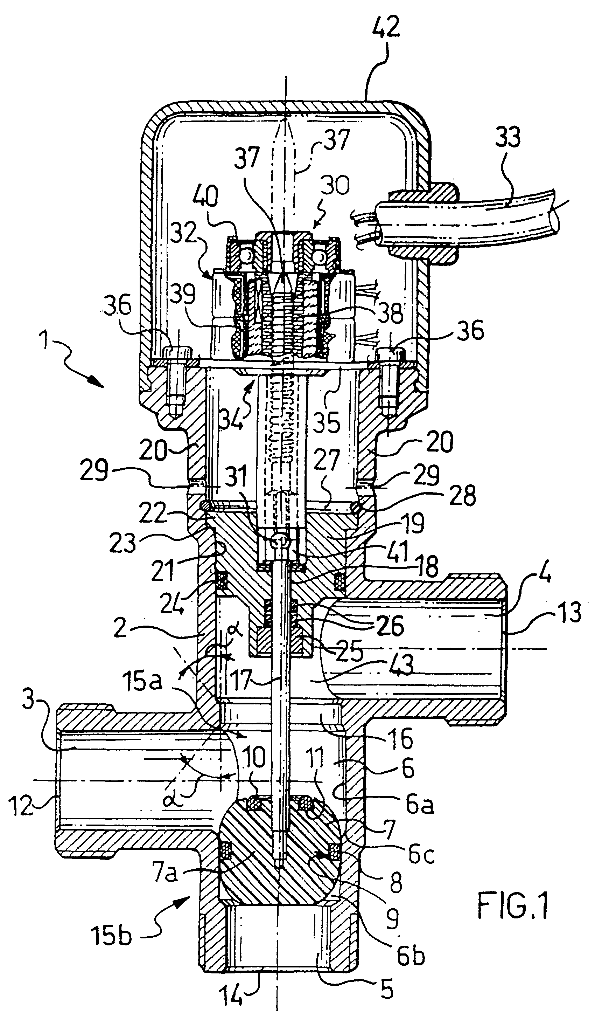

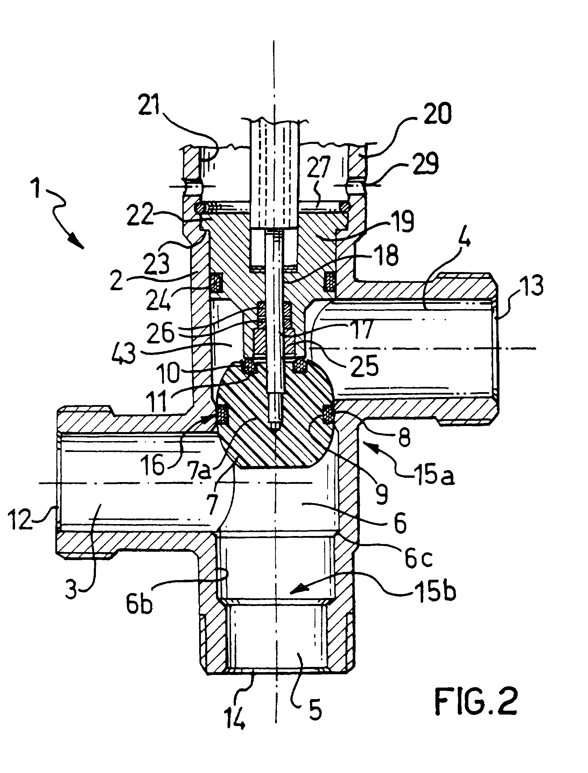

Referring to Figures 1 and 2, generally shown at 1 is a valve assembly according to a first embodiment of the invention. In particular, the valve assembly 1 is a three-way valve intended for installation on household water-heating apparatuses, such as for example household gas-fired boilers.

The valve assembly 1 essentially comprises a valve body 2 in which a fluid inlet conduit 3, a first fluid outlet conduit 4, and a second fluid outlet conduit 5 are formed.

A fluid inlet opening 12 is provided at the free end of the fluid inlet conduit 3, while a first 13 and a second 14 fluid outlet openings are formed downstream of the fluid outlet conduits 4 and 5, respectively.

An essentially cylindrical central chamber 6 comprising two successive portions, respectively a proximal portion 6a and a distal portion 6b with respect to the fluid outlet conduit 4, having a different diameter and a predetermined length, is formed in the valve body 2 between the fluid inlet conduit 3 and the fluid outlet conduits 4, 5.

Advantageously, the successive portions 6a, 6b of the central chamber 6 are connected by a flared section 6c of limited length.

Thus, inside the valve body 2 are defined:
i) a first flowpath 15a extending between the fluid inlet opening 12 and the first fluid outlet opening 13, including: the fluid inlet conduit 3, the central chamber 6, and the first fluid outlet conduit 4; and
ii) a second flowpath 15b, extending between the fluid inlet opening 12 and the second fluid outlet opening 14, including: the fluid inlet conduit 3, the central chamber 6, and the second fluid outlet conduit 5.

Near the openings 12, 13 and 14, the fluid inlet and outlet conduits 3, 4 and 5 are externally threaded for threadably coupling to the ends of threaded fittings (not shown) of respective water circuits, also not shown.

A shutter 7 is slidably guided within the central chamber 6 for reciprocation along a substantially rectilinear travel path between a first and a second position where it closes and, respectively, opens the fluid outlet conduits 4, 5.

More particularly, the shutter 7 is guided in a substantial mating engagement within the large diameter portion 6a of the central chamber 6, while it is removably received with an interference fit, as explained hereinafter, within the portion 6b having a smaller diameter thereof.

For the purpose of simplifying the present description, the central chamber 6 will be referred to hereinafter as: shutter sliding seat.

In the embodiment shown, the shutter 7 comprises an essentially cylindrical metal body 7a laterally provided with an annular gasket 8, which is essentially made of an elastically deformable material, removably mounted in a respective receiving seat 9 radially formed in the side wall of the body 7a.

Advantageously, the diameter of the sliding seat 6 of the shutter 7 is substantially the same as the largest diameter of the same shutter, as measured at the annular side gasket 8. In this way, the sliding seat 6 is capable of effectively guiding the translation movements of the shutter 7 to ensure the required rectilinear travel thereof even without any expensive precision machining.

Preferably, the side wall of the body 7a is connected to the opposite top and bottom faces of the shutter 7 by respective substantially curvilinear portions (having here a parabolic profile) such that the flow rate of the fluid flowing through the valve assembly 1 can advantageously be regulated, as explained hereinafter.

Preferably, the shutter 7 further comprises an additional annular gasket 10, also essentially made of an elastically deformable material, removably mounted in a respective receiving seat 11 axially formed on the top face of the body 7a.

Advantageously, the gasket 10 constitutes a suitable shock-absorber means to dampen any shocks to the shutter 7 at its travel end.

Preferably, the elastically deformable material constituting the aforesaid gaskets 8 and 10 is acrylonitrile rubber (NBR).

The shutter 7 is removably received in fluid-tight manner - - at said first and second positions where it closes and, respectively, opens the fluid outlet conduits 4, 5 -- in a first and a second valve seat formed in the valve body 2 upstream of such conduits.

More particularly, the first valve seat of the shutter 7 is essentially constituted by a chamber 43 axially formed upstream of the fluid outlet conduit 4 and provided with an opening 16 adapted to place the sliding seat 6 of the shutter 7 in fluid communication with said conduit.

On the other hand, the second valve sealing seat of the shutter 7 is essentially constituted by the small-diameter portion 6b of the central chamber 6 distal from the fluid outlet conduit 4.

In this way, both said valve seats of the shutter 7 are substantially located outside of the flowpaths 15b and, respectively, 15a.

For the purpose of simplifying the present description, the chamber 43 and the small-diameter portion 6b of the central chamber 6 will be referred to hereinafter as: first and second valve seats, respectively.

Advantageously, thanks to a proper design of the opening 16 of the first and second valve seats 43 and 6b, the shutter 7 can be received with the interference necessary to ensure the required fluid-tight fit, which will occur in a substantially radial direction, that is, perpendicularly to the travel direction of the shutter.

In this way, it becomes advantageously possible to separate the sealing region of the shutter 7 from the region provided for progressively closing the fluid outlet conduits 4 or 5.

Preferably, the opening 16 of the first valve seat 43 is provided with opposite flaring edges forming with a vertical line a flaring angle α preferably equal to about 30°.

In this way, it is advantageously possible to facilitate both the insertion of the shutter 7 into its guiding and sliding seat 6 and the partial insertion of the shutter 7 into its valve seat with the required interference with the opening 16, minimising the risks of irregular wear or, worse still, of damaging the radial annular gasket 8.

The shutter 7 is attached, in a conventional way nor shown, to an end of a stem 17 which is guided for sliding movement inside a corresponding bore 18 axially formed through a plug 19 mounted in a fluid-tight manner on a cylindrical tubular portion 20 integrally formed with the valve body 2.

In particular, the plug 19 is received in a bore 21 axially formed in the cylindrical tubular portion 20, and is provided with a flange 22 adapted to cooperate in abutting relationship with an annular detent surface 23 internally formed within the bore 21. An annular gasket 24 is interposed between the plug 19 and the valve body 2.

For easier sliding of the stem 17, the plug 19 includes a bush 25 of a suitable anti-friction material which is received in a respective annular seat coaxially formed within the bore 18.

Another pair of annular gaskets 26, mounted adjacent to the bush 25, ensures the necessary seal with the stem 17 so as to prevent undesired fluid leakouts.

In order to provide a proper positioning of the plug 19, a ring 27 is mounted in a respective annular seat 28 internally formed in the bore 21.

Above this seat 28, the cylindrical tubular portion 20 is provided with a plurality of radial holes 29 circumferentially arranged and equally spaced from one another, adapted to drain the cylindrical tubular portion 20 of any fluid that may have leaked through the plug 19.

The valve assembly 1 further comprises means 30 for driving the shutter 7 along the sliding seat 6, arranged to act on a spherical tailpiece 31 formed at the free end of the stem 17.

The driving means 30 is mounted in the cylindrical tubular portion 20, and comprises an electric motor 32, conventionally powered by means of an electric supply cable 33, which acts on a linear actuator means 34. In particular, the electric motor 32 is mounted on a baseplate 35 attached to the free end of the cylindrical tubular portion 20 by conventional fasteners 36 (e.g., screws).

The linear actuator means 34 comprises in turn a shaft 37 having a threaded portion in threaded engagement with an internally threaded metal core 38 located within the windings 39 of the electric motor 32 and rotated thereby. This rotation is guided by a roll bearing 40 mounted at the top of the motor 32.

In a preferred embodiment, the threaded portion of the shaft 37 is provided with an irreversible pitch thread.

The shaft 37 is provided, at its lower end, with a fork head 41 adapted to removably receive the spherical tailpiece 31 of the stem 17, so that the stem 17 can be removably associated to the linear actuator means 34.

Advantageously, the coupling between the stem 17 and the linear actuator means 34 is of reversible type: in fact, for releasing the stem 17 from the fork head 41, it is sufficient to laterally pull the spherical tailpiece 31.

The electric motor 32 and threaded portion of the shaft 37 protruding out of the cylindrical tubular portion 20 are advantageously protected by a box-type cover 42 snap-fitted onto the cylindrical tubular portion 20.

The operation of the valve assembly 1 described above allows to selectively deliver the fluid to the water circuits associated to the first and second flowpaths 15a, 15b.

In order to deliver the fluid to the water circuit associated to the first flowpath 15a, the shutter 7 is positioned with interference within the second valve seat 6b so as to cut off the fluid outlet conduit 5 (see Figure 1).

In this position, the shutter 7 is substantially received for one half into the second valve seat 6b, and the annular gasket 8 is partially compressed by the side walls of the same so as to provide the desired fluid-tight seal.

The incoming fluid to the valve assembly 1 through the fluid inlet opening 12 will then flow along the first flowpath 15a and through the outlet opening 13 to the first water circuit associated therewith.

Advantageously, the position of the shutter 7 substantially outside of the first flowpath 15a contributes to keep at a very low value the pressure drops which the fluid undergoes while flowing through the valve assembly 1.

To deliver the fluid to the water circuit associated to the flowpath 15b, the shutter 7 must be shifted to a second operating position, such as that shown in Figure 2.

In moving from the first to the second operating position, the shutter 7 travels along a substantially rectilinear path within its guiding and sliding seat 6.

The displacement of the shutter 7 is produced by exciting the windings 39 of the electric motor 32 with a supply current. This excitation current generates a magnetic field which rotates the metal core 38, which induces in turn a translation movement of the shaft 37 the threaded portion of which is thread-engaged with the core. This results in a vertical translation movement of the stem 17 associated to the shutter 7.

Advantageously, as the shutter 7 approaches its valve seat 43, the flow rate of the fluid flowing along the flowpath 15a can be regulated from the maximum value down to a null value through a full range of intermediate values, thanks to the shape of the joining section between the side wall of the body 7a of the shutter 7 and the top face thereof.

In such a position, the shutter 7 is substantially received for one half into the first valve seat 43 and completely closes the opening 16 wherein it is received with interference, thereby cutting off the flowpath 15a. In that position, the annular gasket 8 is partially compressed by the inner walls of the opening 16 and thus ensures the desired fluid-tight seal.

The incoming fluid to the valve assembly 1 through the fluid inlet opening 3 will then flow along the second flowpath 15b, and through the second outlet opening 5 to the second water circuit associated therewith.

Here again, the positioning of the shutter 7 substantially outside of the second flowpath 15b contributes to keep down to a very low value the pressure drops which the fluid undergoes while flowing through the valve assembly 1.

To deliver again the fluid to the water circuit associated to the flowpath 15a, the shutter 7 must be shifted for bringing the same to its first operating position shown in Figure 1.

For the purpose, it will be sufficient to reverse the current flow through the windings 39 and, along therewith, the direction in which the metal core 38 is rotated.

Similarly to what has been previously described, as the shutter 7 approaches the second valve seat 6b, the flow rate of the fluid flowing along the flowpath 15b can be regulated from the maximum value down to a null value through a full range of intermediate values, thanks to the shape of the joining section between the side wall of the body 7a of the shutter 7 and the bottom face thereof.

Thanks to the presence of the flared joining section 6c, moreover, the sliding movement of the shutter 7 along its seat 6 is advantageously facilitated, while minimising the risks of irregular wear or damages to the annular gasket 8.

Finally, the threaded shaft 37 having an irreversible thread pitch advantageously allows to maintain the shutter 7 in the first or the second valve seats 43, 6b, without the electric motor 32 having to be kept in an excited state.

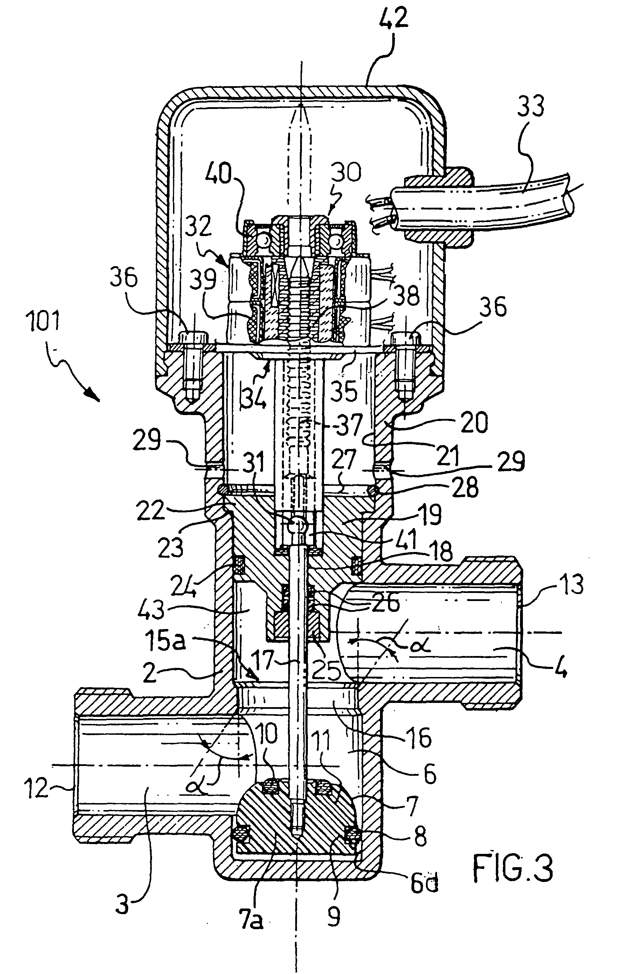

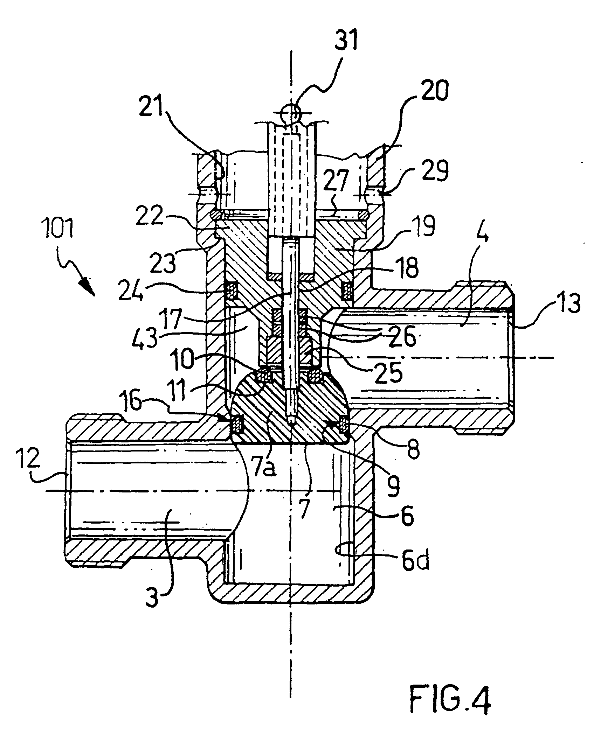

Figures 3 and 4 show another embodiment of the invention, specifically a two-way valve 101 intended for installation on household water-heating apparatuses, such as for example gas-fired boilers of the combined type.

Throughout the following description and in such figures, the elements of the valve 101 which are structurally or functionally equivalent to those previously described in relation to the three-way valve 1 shown in Figures 1 and 2 are indicated by the same reference numerals and will be not further described.

In the embodiment shown in Figures 3 and 4, it is provided only the flowpath 15a extending between the fluid inlet opening 12 and the fluid outlet opening 13 and comprising: the fluid inlet conduit 3, the guiding and sliding seat 6 for the shutter 7, and the first fluid outlet conduit 4.

Said sliding seat 6 is substantially cylindrical, has a constant diameter substantially equal to the largest diameter of the shutter 7, and is closed so as to form a receiving seat for the shutter 7, at an end portion 6d thereof distal from the fluid outlet conduit 4.

Here again, the body 7a of the shutter 7 is essentially cylindrical and comprises a side wall connected to its top face by means of a substantially curvilinear (specifically, parabolic in profile) portion, so as to carry out an advantageous regulation of the flow rate of the fluid flowing through the valve assembly 1.

The operation of the two-way valve assembly 101 allows the flow rate of the fluid flowing along the flowpath 15a to be regulated from the maximum value to a null value through a full range of intermediate values, by operating the shutter 7 by means of a linear actuator means 34 in the same manner as previously explained.

It should be noted that, also in this case, the position of the shutter 7 in the seat 6d substantially outside of the flowpath 15a advantageously contributes to keep down to a very low value the pressure drops which the fluid undergoes while flowing through the valve assembly 101.

The numerous advantages afforded by the valve assembly of this invention can be readily appreciated in the light of the foregoing description.

A first important advantage is represented by the fact that the rectilinear movement of the shutter within its guiding and sliding seat allows to use simpler and less expensive driving means than those used in conventional known valves, thereby simplifying the valve construction as a whole and drastically cutting down manufacturing costs.

Furthermore, the partial introduction of the shutter into its valve seats, while providing an adequately fluid-tight seal and assuring low pressure drops, additionally allows to remove any solid particles caught at the free end of said valve seats, thereby ensuring a suitable cleaning action of the flowpaths.

Also, thanks to a suitable shape of the shutter it is possible to produce at a very low cost a valve which is able to regulate the flow rate of the fluid flowing along the flowpath(s) defined in the valve body.

In this respect, the use of a linear actuator means in combination with a step-by-step motor allows to produce a modulating valve at a very low cost.

The shutter, moreover, can be held in its respective valve seat without the motor having to be kept in an excited state. This allows a simpler and less expensive motor to be used and power consumption reduced.

Finally, the shutter driving means is structurally separated from the flowpath(s), so that the electrical or mechanical portion of such means can be serviced without opening the valve, that is, without emptying the water circuit to which the same is incorporated.

## Claims

1. A valve assembly (1,101) for heating systems and water-heating apparatuses, comprising:
- a valve body (2) wherein a fluid inlet conduit (3), at least one fluid outlet conduit (4,5) and a central chamber (6) are formed;
- a shutter (7) mounted within said central chamber (6) wherein it is reciprocable, along a substantially rectilinear travel path, between a first and a second position whereat it respectively closes and opens said at least one fluid outlet conduit (4,5), said shutter (7) being, in said first and second positions, removably received, in fluid-tight manner and substantially outside of said central chamber (6), in:
i) a first valve seat (43) provided with an opening (16) formed upstream of said at least one fluid outlet conduit (4,5); and respectively in
ii) a second valve seat (6b, 6d) formed at a distal end portion of the central chamber (6) of the shutter (7) with respect to said at least one fluid outlet conduit (4,5);
- at least one flowpath (15a) defined in the valve body (2) and externally to the shutter (7) in the fluid inlet conduit (3), in at least a portion of the central chamber (6) of the shutter (7), and in said at least one fluid outlet conduit (4,5);
- driving means(30) for the shutter (7);
**characterised in that** said shutter (7) comprises a sealing region adapted to be received with interference in said opening (16) of the first valve seat (43) and in said second valve seat (6b,6d) to ensure a fluid-tight seal and a separated modulating region designed to progressively close said at least one fluid outlet conduit (4,5) so as to allow a modulation of the fluid flow rate leaving through said at least one fluid outlet conduit (4,5).

2. A valve assembly (1,101) according to claim 1, wherein the shutter (7) comprises an essentially cylindrical metal body (7a) laterally provided with a first annular gasket (8), said gasket being essentially made of an elastically deformable material and being removably mounted in a respective receiving seat (9) radially formed in the side wall of said body.

3. A valve assembly (1,101) according to claim 2, wherein the shutter (7) further comprises a second annular gasket (10), essentially made of an elastically deformable material and removably mounted in a respective receiving seat (11) axially formed in the top face of said body.

4. A valve assembly (1,101) according to Claim 1, wherein the shutter (7) comprises a body (7a) of substantially spherical shape essentially made of an elastically deformable material.

5. A valve assembly (1,101) according to anyone of claims 2-4, wherein said elastically deformable material is selected from the group comprising: acrylonitrile rubber (NBR), polychloroprene (CR), fluorinated rubber (FP), and ethylene-propylene-diene terpolymers (EPDM).

6. A valve assembly (1,101) according to anyone of claims 1-4, wherein said modulating region comprises at least a portion of the side wall of the body (7a) of the shutter (7).

7. A valve assembly (1,101) according to claim 6, wherein said at least a portion of the side wall of the body (7a) of the shutter (7) is substantially frusto-conical or curvilinear.

8. A valve assembly (1,101) according to claim 1, wherein the central chamber (6) of the shutter (7) is substantially cylindrical and has substantially the same diameter as the largest diameter of the shutter (7).

9. A valve assembly (1,101) according to claim 1, wherein said opening (16) has at least one flaring edge.

10. A valve assembly (1,101) according to claim 1, wherein the second valve seat (6b,6d) is formed upstream of a second fluid outlet conduit (5).

11. A valve assembly (1,101) according to claim 1, wherein the driving means (30) for the shutter (7) comprises linear actuator means (34) acting on a stem (17) attached to the shutter (7) and operated by an electric motor (32).

12. A valve assembly (1,101) according to claim 11, wherein said electric motor (32) is a step-by-step motor.

13. A valve assembly (1,101) according to claim 11, wherein the linear actuator means (34) comprises a shaft (37) provided with a fork head (41) adapted to removably receive a spherical tailpiece (31) formed on a free end of the stem (17).

14. A valve assembly (1,101) according to claim 1, further comprising a plug (19) mounted in a fluid-tight manner on a cylindrical tubular portion (20) integrally formed with said valve body (2), wherein the stem (17) of the shutter (7) is slidably guided, said plug (19) being adapted to seal off in a fluid-tight manner the driving means (30) for the shutter (7).

## Patentansprüche

1. Ventilanordnung (1, 101) für Heizsysteme und Wasserheizgeräte mit:
- einem Ventilkörper (2), in dem ein Fluideinlasskanal (3), wenigstens ein Fluidauslasskanal (4, 5) und eine Hauptkammer (6) ausgebildet sind,
- einem Verschluss (7), der in der Hauptkammer (6) angebracht ist, in der er entlang eines im Wesentlichen geradlinigen Bewegungsweges zwischen einer ersten und einer zweiten Position hin- und herbewegbar ist, wobei er den wenigstens einen Fluidauslasskanal (4, 5) jeweils öffnet und schließt, wobei der Verschluss (7) in den ersten und zweiten Positionen in fluiddichter Weise und im Wesentlichen außerhalb des wenigstens einen Flussweges (15a) entfernbar aufgenommen ist, in:
i) einem ersten Ventilsitz (43), der stromaufwärts des wenigstens einen Fluidauslasskanals (4, 5) mit einer Öffnung (16) ausgebildet ist, und bzw. in
ii) einem zweiten Ventilsitz (6b, 6d), der hinsichtlich des wenigstens einen Fluidauslasskanals (4,5) an einem distalen Endteil der Hauptkammer (6) des Verschlusses (7) ausgebildet ist,
- wenigstens einem Flussweg (15a), der in dem Ventilkörper (2) und außerhalb des Verschlusses (7) in dem Fluideinlasskanal (3) in wenigstens einem Teil der Hauptkammer (6) des Verschlusses (7) und in dem wenigstens einen Fluidauslasskanal (4, 5) definiert ist,
- einer Antriebseinrichtung (30) für den Verschluss (7),
**dadurch gekennzeichnet, dass** der Verschluss (7) einen Dichtbereich, der mit Eingriff in der Öffnung (16) des ersten Ventilsitzes (43) und in dem zweiten Ventilsitz (6b, 6d) aufgenommen zu werden vermag, um eine fluiddichte Abdichtung zu gewährleisten, und einen separaten Modulationsbereich umfasst, der den wenigstens einen Fluidauslasskanal (4, 5) progressiv zu schließen vermag, um eine Modulation der Rate des durch den wenigstens einen Fluidauslasskanal (4,5) austretenden Fluidflusses zu ermöglichen.

2. Ventilanordnung (1, 101) nach Anspruch 1, bei der der Verschluss (7) einen im Wesentlichen zylindrischen, lateral mit einem ersten ringförmigen Ring (8) ausgestatteten Metallkörper (7a) umfasst, wobei der Ring im Wesentlichen aus einem elastisch verformbaren Material hergestellt und in einem entsprechenden, radial in der Seitenwand des Körpers ausgebildeten Aufnahmesitz (9) entfernbar angebracht ist.

3. Ventilanordnung (1, 101) nach Anspruch 2, bei der der Verschluss (7) ferner einen zweiten ringförmigen Ring (10) umfasst, der im Wesentlichen aus einem elastisch verformbaren Material hergestellt ist und in einem entsprechenden, axial in der oberen Stirnfläche des Körpers ausgebildeten Aufnahmesitz (11) entfernbar angebracht ist.

4. Ventilanordnung (1, 101) nach Anspruch 1, bei der der Verschluss (7) einen Körper (7a) von im Wesentlichen sphärischer Form umfasst, der im Wesentlichen aus einem elastisch verformbaren Material hergestellt ist.

5. Ventilanordnung (1, 101) nach einem der Ansprüche 2 bis 4, bei der das elastisch verformbare Material aus der Gruppe ausgewählt ist, die umfasst: Acrylonitrilkunststoff (NBR), Polychloropren (CR), fluorinierter Kunststoff (FP) und Ethylen-propylen-dien-terpolymere (EPDM).

6. Ventilanordnung (1, 101) nach einem der Ansprüche 1 bis 4, bei der der Modulationsbereich wenigstens einen Teil der Seitenwand des Körpers (7a) des Verschlusses (7) umfasst.

7. Ventilanordnung (1, 101) nach Anspruch 6, bei der der wenigstens eine Teil der Seitenwand des Körpers (7a) des Verschlusses (7) im Wesentlichen kegelstumpfförmig oder gekrümmt ist.

8. Ventilanordnung (1, 101) nach Anspruch 1 bei der die Hauptkammer (6) des Verschlusses (7) im Wesentlichen zylindrisch ist und im Wesentlichen den gleichen Durchmesser wie der größte Durchmesser des Verschlusses (7) aufweist.

9. Ventilanordnung (1, 101) nach Anspruch 1, bei der die Öffnung (16) wenigstens einen konischen Rand aufweist.

10. Ventilanordnung (1, 101) nach Anspruch 1, bei der der zweite Ventilsitz (6b, 6d) stromaufwärts eines zweiten Fluidauslasskanales (5) ausgebildet ist.

11. Ventilanordnung (1, 101) nach Anspruch 1, bei der die Antriebseinrichtung (30) für den Verschluss eine lineare Aktuatoreinrichtung (34) umfasst, die auf ein an dem Verschluss (7) befestigte Stange (17) wirkt und mittels eines. Elektromotors (32) betrieben wird.

12. Ventilanordnung (1, 101) nach Anspruch 11, bei der der Elektromotor (32) ein Schrittmotor ist.

13. Ventilanordnung (1, 101) nach Anspruch 11, bei der die lineare Aktuatoreinrichtung (34) einen Schaft (37) umfasst, der mit einem Gabelkopf (41) ausgestattet ist, der ausgelegt ist, ein an einem freien Ende der Stange (17) ausgebildetes, sphärisches Schwanzstück (31) entfernbar aufzunehmen.

14. Ventilanordnung (1, 101) nach Anspruch 1, ferner mit einem Stopfen (19), der in fluiddichter Weise an einem zylindrischen röhrenförmigen, baueinheitlich mit dem Ventilkörper (2) ausgebildeten Teil (20) angebracht ist, in dem die Stange (17) des Verschlusses (7) verschiebbar geführt ist, wobei der Stopfen (19) ausgelegt ist, um die Antriebseinrichtung (30) für den Verschluss (7) in fluiddichter Weise abzudichten.

## Revendications

1. Ensemble de soupape (1, 101) destiné à des systèmes de chauffage et à des appareils de chauffage d'eau, comprenant :
- un corps de soupape (2) dans lequel une conduite d'arrivée du liquide (3), au moins une conduite d'évacuation du liquide (4, 5) et une chambre centrale (6) sont formés ;
- un obturateur (7) monté à l'intérieur de ladite chambre centrale (6) dans laquelle il peut être inversé, le long d'une voie de passage en grande partie rectiligne, entre une première et une deuxième position dans lesquelles il ouvre et ferme respectivement ladite au moins une conduite d'évacuation de liquide au moins (4, 5'), ledit obturateur (7) étant, dans lesdites première et deuxième position, reçu de manière amovible, de manière étanche et en grande partie à l'extérieur de la dite voie de passage au moins (15a), dans :
i) un premier siège de soupape (43) présentant une ouverture (16) formée en amont de ladite au moins une conduite d'évacuation du liquide (4, 5) ; et respectivement dans
ii) un deuxième siège de soupape (6b, 6d) formé à une section d'extrémité distale de la chambre centrale (6) de l'obturateur (7) par rapport à ladite au moins une conduite d'évacuation du liquide (4, 5) ;
- au moins une voie de passage (15a) définie dans le corps de soupape (2) et extérieurement vers l'obturateur (7) au sein de la conduite d'arrivée du liquide (3), dans au moins une section de la chambre centrale (6) de l'obturateur (7), et dans ladite conduite d'évacuation du liquide (4, 5) ;
- des moyens d'entraînement (30) destinés à l'obturateur (7) ;
**caractérisé en ce que** ledit obturateur (7) comprend une zone d'étanchéité adaptée pour être introduite dans ladite ouverture (16) du premier siège de soupape (43) et dans ledit deuxième siège de soupape (6b, 6d) afin de garantir l'étanchéité, et une zone distincte de modulation conçue pour fermer progressivement ladite au moins une conduite d'évacuation du liquide (4, 5) afin de permettre une modulation du débit du liquide passant dans ladite conduite d'évacuation du liquide au moins (4, 5).

2. Ensemble de soupape (1, 101) selon la revendication 1, dans lequel l'obturateur (7) comprend un corps métallique en grande partie cylindrique (7a) muni sur le côté d'un premier joint annulaire (8), ledit joint étant principalement fabriqué en matériau déformable sur le plan élastique et étant monté de manière amovible sur un siège de réception respectif (9) formé de manière radiale sur la paroi latérale dudit corps.

3. Ensemble de soupape (1, 101) selon la revendication 2, dans lequel l'obturateur (7) comprend en outre un deuxième joint annulaire (10), principalement fabriqué en matériau déformable sur le plan élastique et monté de manière amovible sur un siège de réception respectif (11) formé de manière axiale sur la face supérieure dudit corps.

4. Ensemble de soupape (1, 101) selon la revendication 1, dans lequel l'obturateur (7) comprend un corps (7a) de forme en grande partie sphérique principalement fabriqué en matériau déformable sur le plan élastique.

5. Ensemble de soupape (1, 101) selon l'une quelconque des revendications 2 à 4, dans lequel ledit matériau déformable sur le plan élastique est sélectionné à partir du groupe comprenant : le caoutchouc acrylonitrile (NBR), le polychloroprène (CR), le caoutchouc fluoré (FP), et les terpolymères éthylène-propylène-diène (EPDM).

6. Ensemble de soupape (1, 101) selon l'une quelconque des revendications 1 à 4, dans lequel ladite zone de modulation comprend au moins une section de la paroi latérale du corps (7a) de l'obturateur (7).

7. Ensemble de soupape (1, 101) selon la revendication 6, dans lequel ladite au moins une section de la paroi latérale du corps (7a) de l'obturateur (7) est en grande partie tronconique ou curviligne.

8. Ensemble de soupape (1, 101) selon la revendication 1, dans lequel la chambre centrale (6) de l'obturateur (7) est en grande partie cylindrique et possède en grande partie le même diamètre que le diamètre le plus large de l'obturateur (7).

9. Ensemble de soupape (1, 101) selon la revendication 1, dans lequel ladite ouverture (16) possède au moins un bord évasé.

10. Ensemble de soupape (1, 101) selon la revendication 1, dans lequel le deuxième siège de soupape (6b, 6d) est formé en amont d'une deuxième conduite d'évacuation du liquide (5).

11. Ensemble de soupape (1, 101) selon la revendication 1, dans lequel les moyens d'entraînement (30) destinés à l'obturateur (7) comprennent un vérin linéaire (34) agissant sur une tige (17) reliée à l'obturateur (7) et actionnée par un moteur électrique (32).

12. Ensemble de soupape (1, 101) selon la revendication 11, dans lequel ledit moteur électrique (32) est un moteur pas à pas.

13. Ensemble de soupape (1, 101) selon la revendication 11, dans lequel le vérin linéaire (34) comprend un arbre (37) fourni avec une articulation à fourche (41) adaptée pour recevoir de manière amovible une pièce sphérique (31) formée sur une extrémité libre de la tige (17).

14. Ensemble de soupape (1, 101) selon la revendication 1, comprenant en outre un clapet (19) monté de manière étanche sur une section tubulaire cylindrique (20) formée intégralement avec ledit corps de soupape (2), dans lequel la tige (17) de l'obturateur (7) est guidée de manière coulissante, ledit clapet (19) étant adapté pour colmater de manière étanche les moyens d'entraînement (30) destinés à l'obturateur (7).
